# EUROPÄISCHE PATENTSCHRIFT

(11) **EP 0 464 411 B1**
(45) Veröffentlichungstag und Bekanntmachung des Hinweises auf die Patenterteilung: **24.08.1994**
(21) Anmeldenummer: 91109580.0
(22) Anmeldetag: 11.06.1991
(51) Int. Cl.: B29C 49/00, B29C 49/38

(54) **Vorrichtung zur Herstellung von Kunststoff-Rohren**
Apparatus for the manufacture of plastic pipes
Dispositif pour la production de tuyaux en matière plastique

(30) Priorität: 06.07.1990 DE 4021564
(43) Veröffentlichungstag der Anmeldung: 08.01.1992
(73) Patentinhaber: Hegler, Wilhelm, D-97688 Bad Kissingen (DE)
(72) Erfinder: Hegler, Ralph-Peter, Dr., W-8730 Bad Kissingen (DE); Hegler, Wilhelm, W-8730 Bad Kissingen (DE)
(74) Vertreter: Rau, Manfred, Dr. Dipl.-Ing.

(56) Entgegenhaltungen:
- EP-A- 0 281 217
- WO-A-88/05377
- DE-B- 1 242 848
- US-A- 4 003 685
- US-A- 4 319 872

## Beschreibung

Die Erfindung betrifft eine Vorrichtung zur Herstellung von Kunststoff-Rohren, bei der mit einer Formausnehmung versehene sich auf einer Formstrecke jeweils paarweise zu einer Form mit einer Formraumachse ergänzende Halbkokillen auf einem Maschinentisch im Kreislauf geführt angeordnet sind, wobei mindestens zwei sich zu einem Paar ergänzende Halbkokillen einen Formraum-Abschnitt zur Herstellung eines Sonderprofil-Abschnitts des Rohres aufweisen, wobei der Formstrecke ein Spritzkopf eines Extruders vorgeordnet ist, wobei die Halbkokillen mit mit der jeweiligen Formausnehmung verbundenen Vakuumkanälen versehen sind, die in der Formstrecke in im Maschinentisch ausgebildete Vakuumanschlüsse einmünden und die über Vakuumschlitze in die Formausnehmung einmünden.

Eine derartige Vorrichtung ist aus der DE-PS 12 55 292 bekannt. Auf derartigen Vorrichtungen können mit Querrillen, und zwar kreisförmig angeordneten Querrillen, versehene Rohre, sogenannte Wellrohre, hergestellt werden, wie in der EP-A1-0 065 729 (entsprechend US 4 492 551) beschrieben ist. Weiterhin können mit schraubenlinienförmig verlaufenden Querrillen versehene Wellrohre hergestellt werden, wie in der DE-PS 12 42 848 dargestellt ist. Anstelle der Querrillen können Rippen vorgesehen sein, wie der DE-PS 37 01 822 entnehmbar ist. Das Ausformen der Querrillen oder Rippen erfolgt im Vakuumverfahren, d.h. über mit Vakuum beaufschlagte Vakuumschlitze, die zumindest ganz überwiegend quer zur Richtung der Formraumachse angeordnet sind. Wie aus der DE-PS 17 04 715 hervorgeht, können auf der Vorrichtung nach der DE-PS 12 55 292 auch Rohre mit biegsamen Abschnitten hergestellt werden. Weiterhin können die geschilderten Rohre als Verbundrohre mit einem zusätzlichen inneren Rohr ausgebildet sein.

Wenn Rohre mit Sonderprofil-Abschnitten hergestellt werden sollen, die zumindest bereichsweise ein kalibrierfähiges Profil, d.h. ein Profil aufweisen, das auch in ortsfesten Extrudier-Werkzeugen hergestellt werden könnte, dann ist eine qualitativ ausreichend gute Herstellung mit einer Vorrichtung der gattungsgemäßen Art im Vakuumverfahren nicht möglich.

Der Erfindung liegt daher die Aufgabe zugrunde, eine Vorrichtung der gattungsgemäßen Art so auszugestalten, daß auch Sonderprofil-Abschnitte mit zumindest teilweise kalibrierfähigen Profilen im Vakuumverfahren mit hoher Genauigkeit und hoher Qualität herstellbar sind.

Diese Aufgabe wird erfindungsgemäß dadurch gelöst, daß der Formraum-Abschnitt mindestens teilweise in Richtung der Formraumachse orientierte Flächen aufweist und daß mindestens ein Vakuumschlitz im Bereich dieser Flächen zumindest überwiegend parallel zur Formraumachse verläuft und in dem - bezogen auf die Formraumachse - radial am weitesten von dieser entfernten Bereich in den Formraum einmündet. Hierdurch wird sichergestellt, daß das Sonderprofil unter Vakuum sauber und vollständig und qualitativ gut ausgeformt wird. Wenn von Vakuum die Rede ist, dann wird hierunter ein Luftdruck verstanden, der kleiner als Atmosphärendruck ist. Unter Flächen werden nicht zwingend ebene Flächen, sondern auch gekrümmte Flächen verstanden. Die Vakuumschlitze müssen nicht zwingend durchgehend ausgebildet sein; sie können auch durch in eine Richtung hintereinander angeordnete kurze Vakuumschlitze oder Lochreihen gebildet sein; entscheidend ist ihre Orientierung zumindest überwiegend parallel zur Formraumachse. Das erfindungsgemäß angestrebte Ziel wird naturgemäß auch noch erreicht, wenn der mindestens eine Vakuumschlitz in unmittelbarer Nähe des radial am weitesten von der Formraumachse entfernten Bereichs in den Formraum einmündet. Wenn genau definierte, einen relativen maximalen Abstand zur Formraumachse aufweisende Stoßkanten zwischen Flächen der jeweiligen Halbkokille vorhanden sind, dann mündet der jeweilige Vakuumschlitz nach Anspruch 2 in dieser Stoßkante. Durch die Weiterbildung nach Anspruch 3 kann die Vakuumbeaufschlagung noch verbessert werden mit der Folge, daß die Ausformung noch weiter verbessert wird.

Für bestimmte Geometrien der Sonderprofil-Abschnitte kann die Weiterbildung nach Anspruch 4 zweckmäßig sein.

Die Vakuumschlitze weisen in bekannter Weise eine Breite von kleiner oder gleich 0,5 mm auf um sicherzustellen, daß bei der Ausformung des Rohres der noch warmplastische Kunststoff nicht in die Vakuumschlitze hineingezogen wird. Durch die erfindungsgemäßen Maßnahmen wird primär lediglich sichergestellt, daß eine vollständige, flächige Anlage des noch warmplastischen Schlauches zur Erzeugung eines Rohres an den Flächen bzw. der Wand des entsprechenden Formraum-Abschnitts erreicht wird.

Weitere Einzelheiten der Erfindung ergeben sich aus der nachfolgenden Beschreibung zahlreicher Ausführungsbeispiele anhand der Zeichnung. Es zeigt
- Fig. 1: eine Draufsicht auf eine Vorrichtung nach der Erfindung,
- Fig. 2: einen Vertikalschnitt durch ein Halbkokillenpaar der Vorrichtung,
- Fig. 3: ein erstes Rohr mit einem Sonderprofil-Abschnitt in einer Teil-Schnitt-Darstellung entsprechend der Schnittlinie III-III in Fig. 4
- Fig. 4: einen Querschnitt durch das erste Rohr gemäß der Schnittlinie IV-IV in Fig. 3,
- Fig. 5: eine Halbkokille zur Herstellung des ersten Rohres in Seitenansicht,
- Fig. 6: die Halbkokille nach Fig. 5 in Stirnansicht, teilweise aufgebrochen,
- Fig. 7: ein zweites Rohr mit einem Sonderprofil-Abschnitt in einem Teilschnitt gemäß der Schnittlinie VII-VII in Fig. 8,
- Fig. 8: einen Querschnitt durch das zweite Rohr gemäß der Schnittlinie VIII-VIII in Fig. 7,
- Fig. 9: eine Halbkokille zur Herstellung des zweiten Rohres in Seitenansicht,
- Fig. 10: die Halbkokille nach Fig. 9 in Stirnansicht in teilweise aufgebrochener Darstellung,
- Fig. 11: ein drittes Rohr im Teil-Längs-Schnitt gemäß der Schnittlinie XI-XI in Fig. 12,
- Fig. 12: das dritte Rohr im Querschnitt gemäß der Schnittlinie XII-XII in Fig. 11,
- Fig. 13: eine Halbkokille zur Herstellung des dritten Rohres in Seitenansicht,
- Fig. 14: die Halbkokille nach Fig. 13 in Stirnansicht in teilweise aufgebrochener Darstellung,
- Fig. 15: ein viertes Rohr mit einem Sonderprofil-Abschnitt in einem Teil-Längs-Schnitt gemäß der Schnittlinie XV-XV in Fig. 16,
- Fig. 16: einen Querschnitt durch das vierte Rohr gemäß der Schnittlinie XVI-XVI in Fig. 15,
- Fig. 17: eine Halbkokille zur Herstellung des vierten Rohres in Seitenansicht,
- Fig. 18: die Halbkokille nach Fig. 17 in Stirnansicht und teilweise aufgebrochener Darstellung,
- Fig. 19: ein fünftes Rohr mit einem Sonderprofil-Abschnitt in teilweise aufgebrochener Darstellung,
- Fig. 20: einen Querschnitt durch das fünfte Rohr gemäß der Schnittlinie XX-XX in Fig. 19,
- Fig. 21: eine Halbkokille zur Herstellung des fünften Rohres in Seitenansicht,
- Fig. 22: die Halbkokille nach Fig. 21 in Stirnansicht in teilweise aufgebrochener Darstellung,
- Fig. 23: eine abgewandelte Ausführungsform einer Halbkokille zur Herstellung des zweiten Rohres in Seitenansicht und
- Fig. 24: die Halbkokille nach Fig. 23 in Stirnansicht in teilweise aufgebrochener Darstellung.

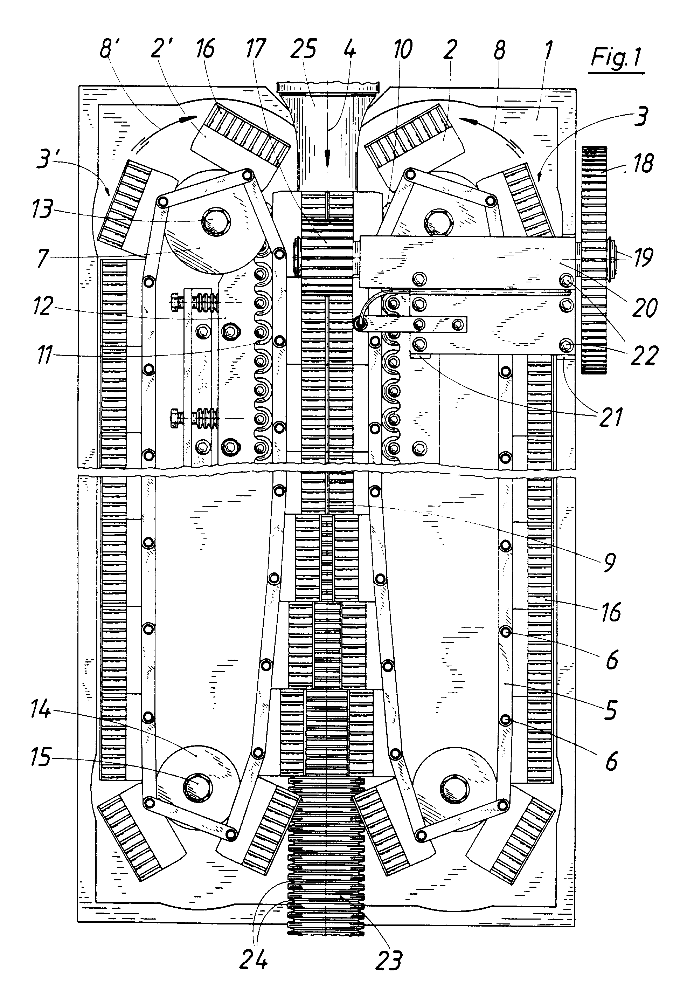

Wie Fig. 1 erkennen läßt, weist eine Vorrichtung zur Herstellung von Kunststoffrohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außenliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3' sind an ihrem in Produktionsrichtung 4 gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrecke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu einer parallelen und aneinanderliegenden Stellung zu erreichen, sind sogenannte Schließrollen 10 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2, 2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Rohre 23 mit u.a. einer Querprofilierung, d.h. mit über deren Umfang umlaufenden Rillen 24 hergestellt.

Die Rohre 23 werden weiter unten noch genauer beschrieben. Hierzu ist ein Extruder vorgesehen, von dem nur der Spritzkopf 25 angedeutet ist, aus dem ein nicht sichtbarer Schlauch extrudiert wird, der in noch warmplastischem Zustand in die in der Formstrecke 9 gebildete Form einläuft, in der unter anderem die Querprofilierung ausgebildet wird. Die bisher beschriebene Vorrichtung ist bekannt, und zwar beispielsweise aus der EP-A-0 065 729. Mit dieser Vorrichtung können in gleicher Weise sogenannte Verbundrohre hergestellt werden die äußerlich dem Rohr 23 gleichen und innen noch mit einem durchgehend glatten Rohr einstückig ausgebildet sind.

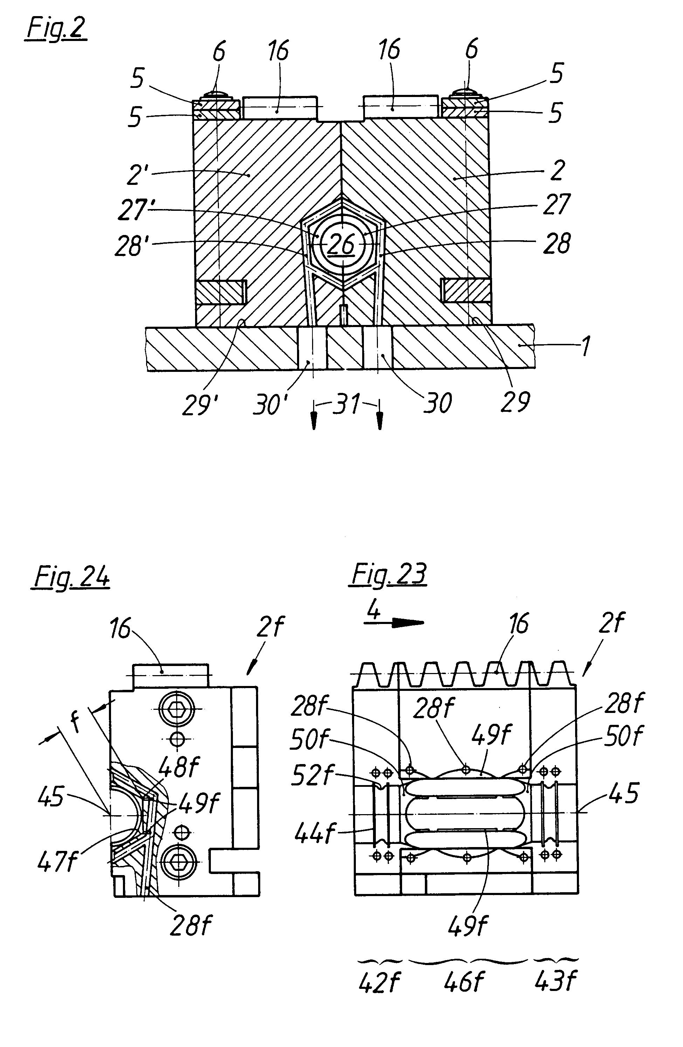

In der Formstrecke 9 erfolgt u.a. die Ausformung der Rillen 24 durch Vakuumbeaufschlagung des in der Formstrecke 9 gebildeten Formraums 26. Die in den Halbkokillen 2, 2' zur Bildung eines Formraums 26 ausgeformten Formausnehmungen 27, 27' haben eine zu der Außenform des Rohres 23 komplementäre Form. Sie sind mit Vakuumkanälen 28, 28' versehen, die in der Nähe der Wand der Formausnehmung 27 bzw. 27' verlaufen und diese bei paarweise aneinanderliegenden Halbkokillen 2, 2' in verhältnismäßig geringem Abstand umschließen. Von den Vakuumkanälen 28, 28' münden zahlreiche, weiter unten noch zu beschreibende Vakuumschlitze in die Formausnehmung 27 bzw. 27'. Die Vakuumkanäle 28, 28' sind bei aneinanderliegenden Halbkokillen 2, 2' miteinander verbunden, wie aus Fig. 2 hervorgeht. Die Vakuumkanäle 28 bzw. 28' münden in die auf dem Maschinentisch 1 aufliegende Unterseite 29 bzw. 29' der Halbkokillen 2, 2'. Bei paarweise aneinanderliegenden Halbkokillen 2, 2' sind sie in Überdeckung mit im Maschinentisch 1 angebrachten Vakuumanschlüssen 30, 30', die wiederum an eine Vakuumpumpe angeschlossen sind. Die Luftströmung in den Vakuumkanälen 28, 28' und an den Vakuumanschlüssen 30, 30' ist durch Richtungspfeile 31 gekennzeichnet.

In den nachfolgenden Beispielen werden jeweils Rohre dargestellt und beschrieben, die streckenweise oder durchgängig Sonderprofil-Abschnitte aufweisen. Die zur Herstellung erforderlichen Halbkokillen werden hierzu ebenfalls dargestellt.

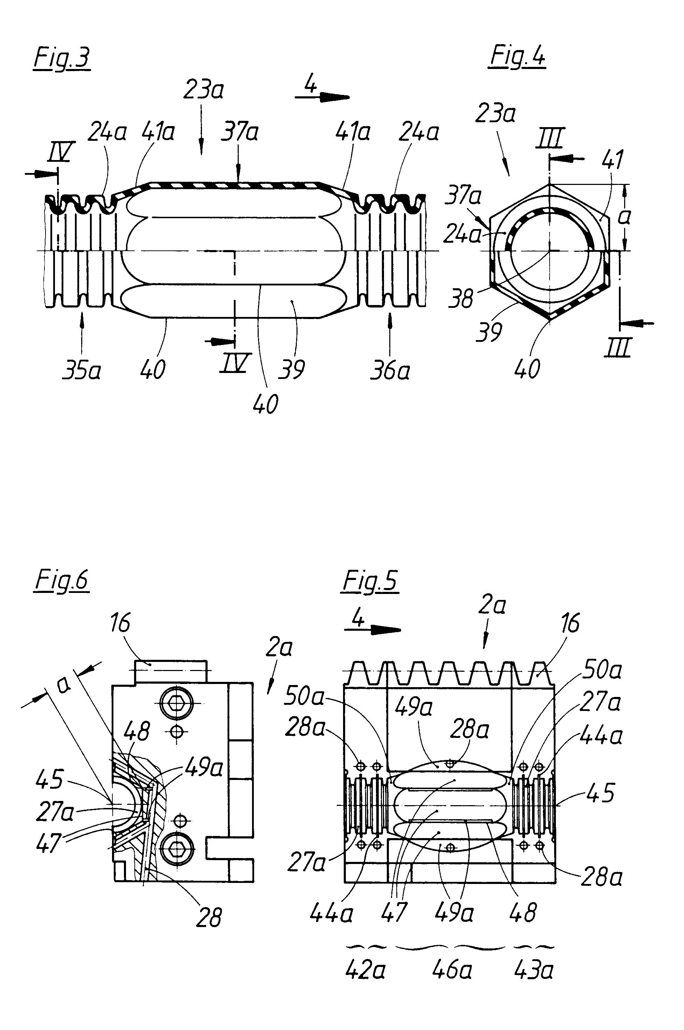

Das in den Figuren 3 und 4 dargestellte Rohr 23a weist in üblicher, oben bereits beschriebener Weise hergestellte Rohr-Abschnitte 35a und 36a auf, die mit Querrillen 24a versehen sind. Zwischen den beiden Abschnitten 35a und 36a ist ein Sonderprofil-Abschnitt 37a ausgebildet, der einen Mehrkant-Querschnitt, im vorliegenden Fall einen regelmäßigen Sechskant-Querschnitt aufweist. Der Abschnitt 37a weist also mehrere, im konkreten Fall sechs, parallel zur Rohrachse 38 und damit zur Produktionsrichtung 4 verlaufende Außenflächen 39 auf, die sich jeweils an Profilkanten 40 stoßen, die also auch parallel zur Rohrachse 38 verlaufen. Der Abstand a dieser Profil-Kanten 40 und der Rohrachse 38 ist - bezogen auf die beiden sich an jeweils eine Profil-Kante 40 anschließenden Außenflächen 39 der maximale Abstand von der Rohrachse 38. Mit anderen Worten heißt dies, daß die Außenflächen 39 jeweils an ihren Profilkanten 40 einen maximalen Abstand a zur Rohrachse 38 aufweisen und daß der jeweils zwischen den beiden eine Außenfläche 39 begrenzenden Profil-Kanten 40 liegende Bereich einer Außenfläche 39 einen radialen Abstand von der Rohrachse 38 hat, der kleiner ist als a. Zwischen dem durch die Außenflächen 39 begrenzten Bereich des Sonderprofil-Abschnitts 37a und den benachbarten Abschnitten 35a und 36a ist jeweils ein Übergangsbereich 41a ausgebildet.

In den Fig. 5 und 6 ist eine Halbkokille 2a dargestellt, wie sie zur Ausformung der Rohrabschnitte 35a, 36a und des dazwischen liegenden Sonderprofil-Abschnittes 37a eines Rohres 23a eingesetzt wird. Sie weist Formraum-Abschnitte 42a und 43a auf, die den Querschnitt der Querrillen 24a entsprechende Formausnehmungen 27a aufweisen. Um die Ausformung der Querrillen 24a sicherzustellen, sind in üblicher Weise Vakuumschlitze 44a vorgesehen, die mit den Vakuumkanälen 28a verbunden sind und die jeweils im - bezogen auf die Rohrachse 38 - radial am weitesten außenliegenden Bereich der Querrillen 24a in diese einmünden. Dies ist insbesondere aus Fig. 5 erkennbar.

Die Rohrachse 38 entspricht der Formraumachse 45. Die Vakuumschlitze 44a verlaufen - wie Fig. 5 erkennen läßt - quer, also unter einem rechten Winkel, zur Richtung der Formraumachse 45.

Zwischen den beiden Formraum-Abschnitten 42a, 43a, ist ein Formraum-Abschnitt 46a ausgebildet, der zur Ausformung des Sonderprofil-Abschnittes 37a dient. Er weist Formwände 47 auf, die zur Ausformung der Außenflächen 39 dienen. An den Stoßkanten 48 oder in unmittelbarer Nähe zweier solcher benachbarter Formwände 47 münden Vakuumschlitze 49a in den Formraum-Abschnitt 46a, die ebenfalls mit mindestens einem Vakuumkanal 28a verbunden sind. Diese Vakuumschlitze 49a verlaufen also parallel zu den zu erzeugenden Profil-Kanten 40, d.h. parallel zur Formraumachse 45, wie der Verlauf der Vakuumschlitze 49a in Fig. 5 zeigt, werden diese mit einem Scheibenfräser in die Halbkokille 2a geschnitten. Der radiale Abstand a der Vakuumschlitze 49 von der Formraumachse 45 ist also der größte radiale Abstand, den ein Bereich der Formwand 47 von der Formraumachse 45 hat. Eine gute gleichmäßige saubere Ausformung des Sonder-Profilabschnittes 37a ist also gewährleistet. In den zur Ausformung der Übergangsbereiche 41a vorgesehenen Formraum-Abschnitten 50a sind nicht immer gesonderte Vakuumschlitze vorgesehen. Die Evakuierung erfolgt in diesem Ausführungsbeispiel über die Vakuumschlitze 49a, da diese auch relativ zu diesen Formraum-Abschnitten 50a - bezogen auf die Formraumachse 45 - radial am weitesten außen liegen.

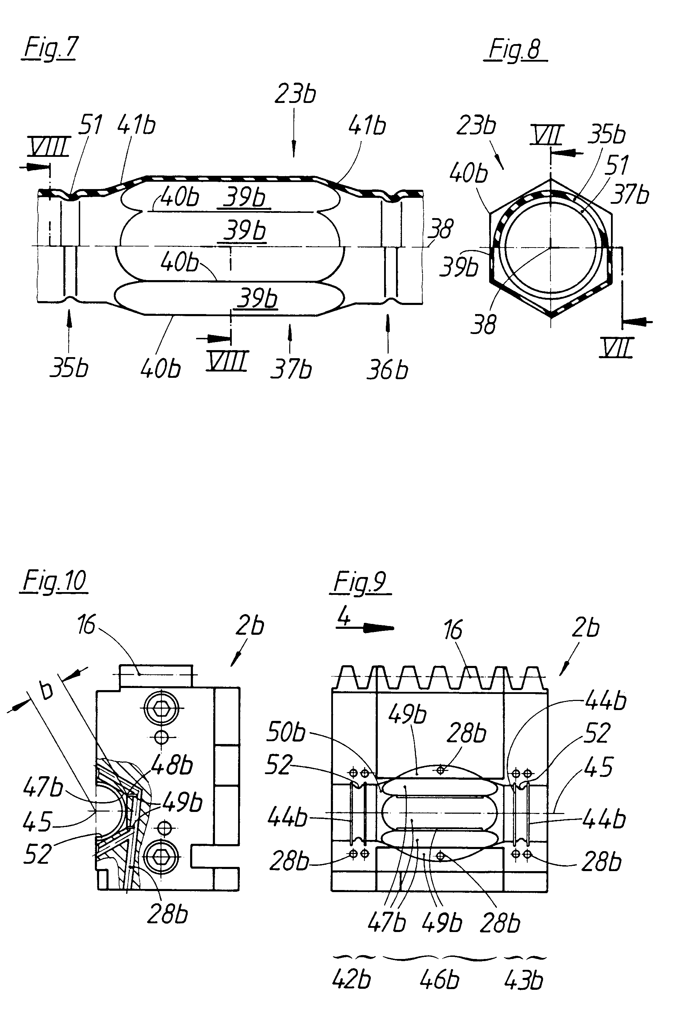

In den Fig. 7 und 8 ist ein Rohr 23b dargestellt, das bereichsweise in einer Halbkokille 2b nach den Fig. 9 und 10 ausgeformt wird. Es weist Rohr-Abschnitte 35b und 36b auf, zwischen denen ein Sonderprofil-Abschnitt 37b ausgeformt ist, der jeweils mittels eines Übergangsbereichs 41b in den Rohr-Abschnitt 35b bzw. 36b übergeht.

Die Rohr-Abschnitte 35b und 36b sind im Grundsatz glattwandig ausgebildet, haben also ein kalibrierfähiges Profil, wie es beispielsweise auch durch Extrudieren hergestellt werden könnte. Sie weisen jeweils kurz vor dem Übergangsbereich 41b eine im Querschnitt etwa halbkreisförmige Einschnürung 51 auf. Die Einschnürungen 51 verlaufen quer, also senkrecht, zur Rohrachse 38. Der Sonderprofil-Abschnitt 37b ist identisch ausgebildet wie der Sonderprofil-Abschnitt 37a im Ausführungsbeispiel nach den Fig. 3 und 4. Es werden deshalb ohne weitere Beschreibung für dieselben Teile dieselben Bezugsziffern unter Hinzufügung eines b verwendet. Die in den Fig. 9 und 10 dargestellte Halbkokille 2b, die zur Ausformung des in den Fig. 7 und 8 dargestellten Abschnitts des Rohres 23b dient, weist Formraum-Abschnitte 42b und 43b auf, die zur Herstellung der Rohr-Abschnitt 35b und 36b dienen. Sie weisen lediglich einen der jeweiligen Einschnürung 51 entsprechenden Formwulst 52 auf, der zur Ausformung der Einschnürung 51 dient. Beiderseits des Formwulstes 52, also am Übergang zur sich anschließenden glatten Formwand sind Vakuumschlitze 44b ausgebildet, die mit den Vakuumkanälen 28b jeweils verbunden sind. Sie befinden sich also in einem Bereich, der den - bezogen auf die benachbarten Bereiche - maximalen Abstand zur Formraumachse 45 aufweist.

Der zur Ausformung des Sonderprofil-Abschnittes 37b dienende Formraum-Abschnitt 46b ist identisch zu dem Formraum-Abschnitt 46a nach Fig. 5 und 6 ausgebildet. Es werden daher in den Fig. 8 und 9 dieselben Teile mit derselben Bezugsziffer bezeichnet, die um ein b ergänzt ist, ohne daß es einer erneuten Beschreibung bedarf. Für den Abstand b zwischen der Formraumachse 45 und der Stoßkante 48b gilt das oben zum Abstand a Gesagte.

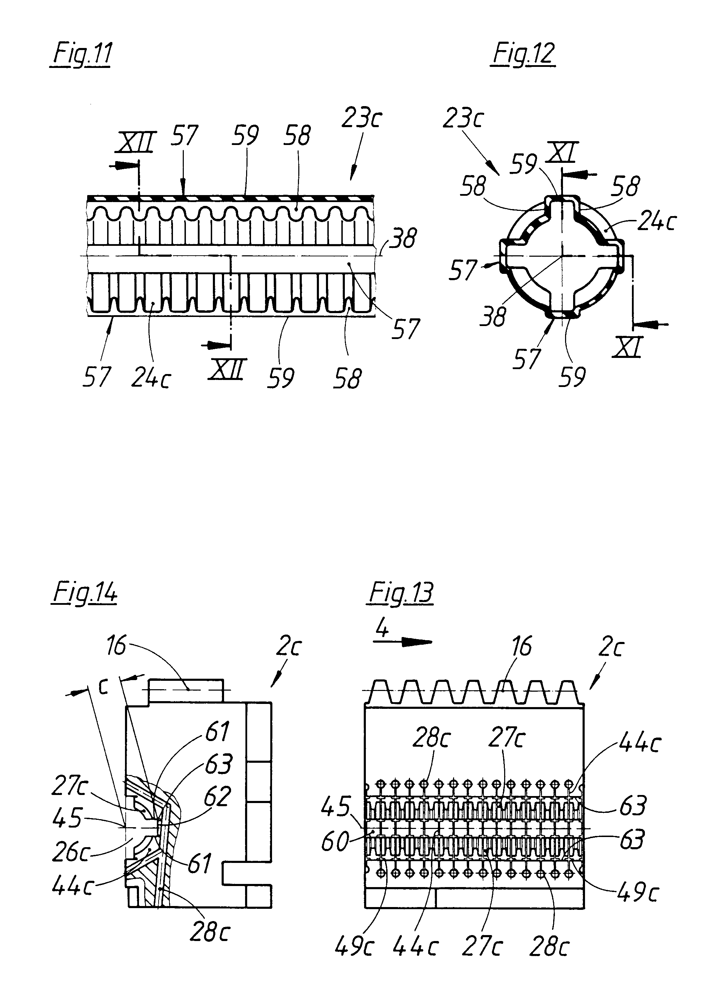

In den Fig. 11 und 12 ist der Abschnitt eines Rohres 23c abgebildet, das über seine ganze Länge gleich ausgebildet ist, das also durchgängig einen Sonderprofil-Abschnitt aufweist. Es weist Querrillen 24c auf, die sich in Umfangsrichtung jeweils nur abschnittsweise erstrecken. Zwischen den Querrillen 24c sind sich in Längsrichtung des Rohres 23c und parallel zur Rohrachse 38 erstreckende im Querschnitt gemäß Fig. 12 etwa rechteckige, insgesamt also etwa quaderförmige, ununterbrochene Erhebungen 57 ausgeformt. Diese Erhebungen 57 weisen jeweils zwei Seitenflächen 58, die etwa parallel zu einem Radius zur Rohrachse 38 verlaufen, und eine Außenfläche 59 auf, die quer hierzu und quer zur Rohrachse 38 verläuft. Diese Außenflächen 59 ragen radial geringfügig über die Querrillen 24c vor, so daß die Außenflächen 59 mehrerer Rohre 23c an diesen Außenflächen 59 aneinandergelegt und unter paralleler Anordnung ihrer Rohrachsen 38 gestapelt werden können. Hierbei werden zwischen den aneinanderliegenden Erhebungen 57, also im Bereich der Querrillen 24c, Kanäle gebildet. Der Einsatz solcher Rohre 23c ist also - gleichermaßen wie der nach den Fig. 3, 4 und 7,8 - für Wärmeübertrager denkbar.

Eine zur Herstellung des Rohres 23c nach den Fig. 11 und 12 einsetzbare Halbkokille 2c weist zur Herstellung der Querrillen 24c geeignete Formausnehmungen 27c auf, die über Vakuumschlitze 44c mit Vakuumkanälen 28c verbunden sind. Diese Vakuumschlitze 44c erstrecken sich in diesem Fall über den vollen halbzylindrischen Umfang des Formraums 26c der Halbkokille 2c. Sie verlaufen quer zur Formraumachse 45. Die Halbkokille 2c ist weiterhin mit zur Ausformung der Erhebungen 57 dienenden Ausnehmungen 60 versehen, die zur Ausformung der Seitenflächen 58 entsprechende Seitenwände 61 und zur Ausformung der Außenfläche 59 jeweils eine Außenwand 62 aufweisen. An den Stoßkanten 63 zwischen jeweils einer Seitenwand 61 und einer Außenwand 62 sind einzelne Vakuumschlitze 49c ausgebildet, die also parallel zur Formraumachse 45 verlaufen. Sie sind direkt an die Vakuumschlitze 44c angeschlossen und über diese jeweils mit einem Vakuumkanal 28c verbunden. Die fortlaufend hintereinander angeordneten Vakuumschlitze 49c, die einer Stoßkante 63 zugeordnet sind, sind also nicht miteinander verbunden. Auch hier gilt, daß der radiale Abstand c von der Formraumachse 45 zu einem Vakuumschlitz 49c bezogen auf den jeweiligen Abstand der benachbarten Bereiche der Seitenwände 61 bzw. der Außenwand 62 von der Formraumachse 45 der größtmögliche radiale Abstand ist, so daß das zur Ausformung der Seitenflächen 58 und der Außenfläche 59 einer Erhebung 57 notwendige Vakuum an der - bezogen auf die Formraumachse 45 - radial am weitesten außenliegenden Stelle aufgebracht wird.

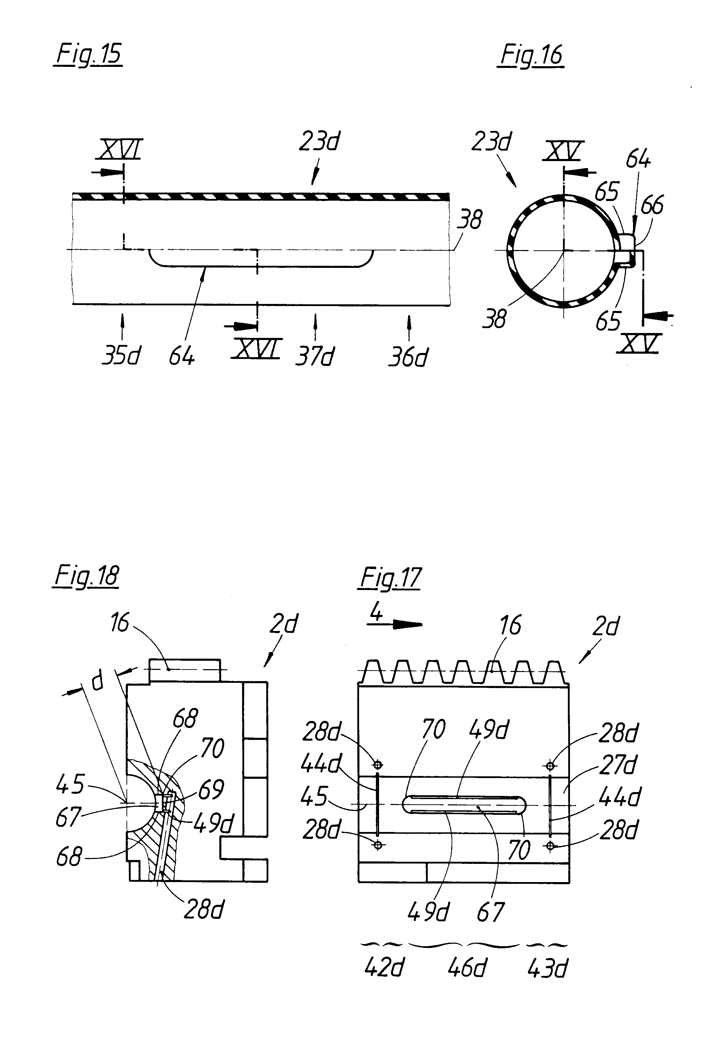

Das in den Fig. 15 und 16 dargestellte Rohr 23d weist rein zylindrische Rohr-Abschnitte 35d und 36d auf, zwischen denen ein Sonderprofil-Abschnitt 37d angeordnet ist. Er weist einen zylindrischen Bereich auf, der mit dem der Rohr-Abschnitte 35d und 36d identisch ist. Hieraus erhebt sich eine Erhebung 64 radial nach außen, die von Seitenflächen 65 und einer Außenfläche 66 begrenzt ist und zwar ähnlich wie die Erhebung 57 des Ausführungsbeispiels nach den Fig. 11 und 12, wobei lediglich diese Erhebung 64 sich nur über einen gewissen Sonderprofil-Abschnitt 37d parallel zur Rohrachse 38 erstreckt.

Die in den Fig. 17 und 18 dargestellte, zur Herstellung des Rohres nach den Fig. 15 und 16 eingesetzte Halbkokille 2d weist eine im wesentlichen zylindrische Formausnehmung 27d auf, wobei Formraum-Abschnitte 42d und 43d zwischen sich einen Formraum-Abschnitt 46d einschließen. Die Formraum-Abschnitte 42d und 43d sind zylindrisch ausgebildet. In sie münden Vakuumschlitze 44d ein, die mit Vakuumkanälen 28d verbunden sind. Die Vakuumschlitze 44d verlaufen - wie allgemein üblich - quer zur Formraumachse 45. Im Formraum-Abschnitt 46d ist eine parallel zur Formraumachse 45 verlaufende nutartige Ausnehmung 67 ausgebildet, die im Querschnitt der Erhebung 64 angepaßt ist. Sie weist Seitenwände 68 und eine Außenwand 69 zur Ausformung der Seitenflächen 65 bzw. der Außenfläche 66 auf. An der Stoßkante 70 zwischen einer Seitenwand 68 und der Außenwand 69 mündet jeweils ein Vakuumschlitz 49d in die Ausnehmung 67 ein. Diese Vakuumschlitze 49d sind wiederum mit einem Vakuumkanal 28d verbunden. Auch hier gilt, daß der radiale Abstand d der parallel zur Formraumachse 45 verlaufenden Stoßkanten 70 der maximale radiale Abstand der Außenwand 69 bzw. Seitenwände 68 von der Formraumachse 45 ist.

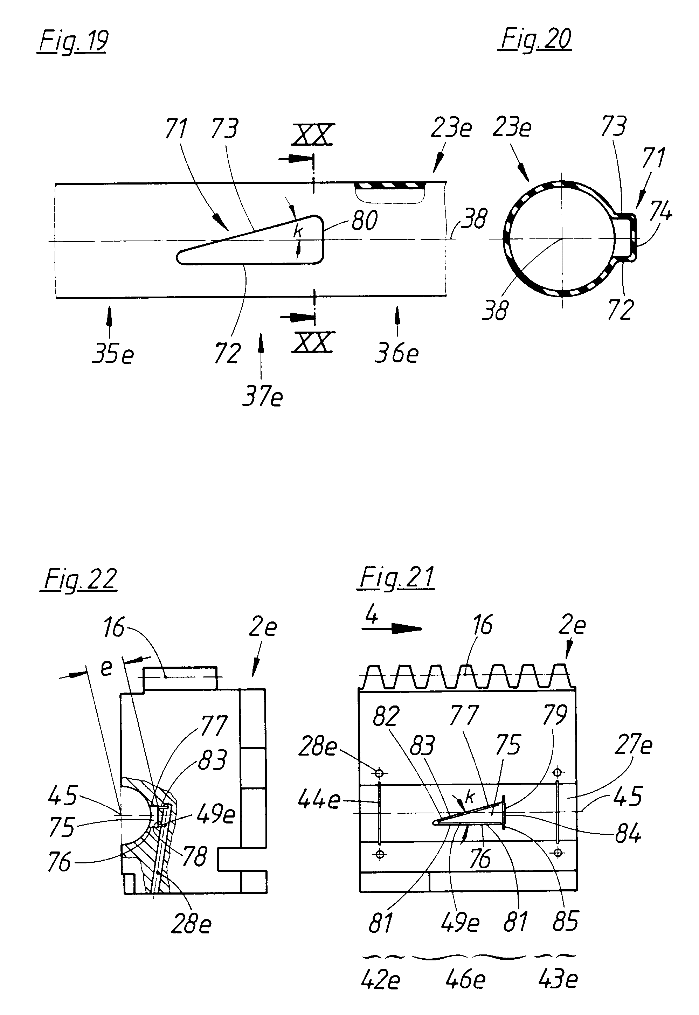

Das Rohr 23e nach den Fig. 19 und 20 unterscheidet sich von dem Rohr 23d nach den Fig. 15 und 16 nur dadurch, daß eine Erhebung 71 vorgesehen ist, die sich von der Erhebung 64 unterscheidet. Daher sind ansonsten alle Bezugsziffern aus den Fig. 15, 16 verwendet, denen ein e hinzugefügt ist, ohne daß es einer erneuten Beschreibung bedarf. Die Erhebung 71 weist ein parallel zur Rohrachse 38 verlaufende Seitenfläche 72 und eine unter einem spitzen Winkel k zur Rohrachse 38 verlaufende Seitenfläche 73 auf. Nach außen ist die Erhebung 71 durch eine Außenfläche 74 abgeschlossen. Der Winkel k ist auf jeden Fall kleiner als 30° und zwar bevorzugt 10 bis 20°.

Die zur Herstellung des Rohres 23e nach den Fig. 19, 20 einsetzbare Halbkokille ist in den Fig. 21, 22 dargestellt. Es werden weitgehend dieselben Bezugsziffern wie in den Fig. 17, 18 verwendet, denen jeweils ein e nachgestellt ist. Zur Herstellung der Erhebung 71 ist eine sich radial von der Formausnehmung 27e weg erstreckende Ausnehmung 75 vorgesehen, die zwei Seitenwände 76, 77 zur Ausformung der Seitenflächen 72, 73 und eine Außenwand 78 zur Ausformung der Außenfläche 74 aufweist. Die beiden spitzwinklig unter dem Winkel k zusammentreffenden Seitenwände 76, 77 sind noch durch eine kurze, quer zur Formraumachse 45 verlaufende Querwand 79 miteinander verbunden, die zur Ausformung einer entsprechenden, die Seitenflächen 72, 73 verbindenden Querfläche 80 dient. An der Stoßkante 81 zwischen der Seitenwand 76 und der Außenwand 78 der Ausnehmung 75 ist ein Vakuumschlitz 49e ausgebildet, der in üblicher Weise an einen Vakuumkanal 28e angeschlossen ist. Dieser Vakuumschlitz 49e erstreckt sich parallel zur Formraumachse 45. An der Stoßkante 82 zwischen der Seitenwand 77 und der Außenwand 78 ist ein Vakuumschlitz 83 ausgebildet, der mit dem Vakuumschlitz 49e ebenfalls den Winkel k einschließt und der ebenfalls an den Vakuumkanal 28e angeschlossen ist, wie insbesondere aus Fig. 22 hervorgeht. An der Stoßkante 84 zwischen der Querwand 79 und der Außenwand 78 ist noch ein Vakuumschlitz 85 ausgebildet, der also quer zur Formraumachse 45 verläuft und der ebenfalls an einen eigenen Vakuumkanal 28e angeschlossen ist. Auch hier gilt, daß der Abstand e der Stoßkanten 81, 82, 84 und damit der Abstand der Vakuumschlitze 49e, 83, 85 von der Formraumachse 45 der relativ größte Abstand der Ausnehmung 75 von der Formraumachse 45 ist.

Das Ausführungsbeispiel nach den Fig. 23 und 24 entspricht weitgehend dem nach den Fig. 9 und 10. Es sind daher ohne weitere Beschreibung dieselben Bezugsziffern verwendet, denen ein f hinzugefügt ist. Das Rohr, das unter Verwendung der Halbkokille 2f nach den Fig. 23 und 24 hergestellt wird, ist identisch dem nach den Fig. 7 und 8, so daß es keiner erneuten zeichnerischen Darstellung bedarf. Unterschiedlich an der Halbkokille 2f im Vergleich zu der Halbkokille 2b ist lediglich, daß die Vakuumschlitze 49f sich nicht über die volle Länge des Formraum-Abschnitts 46f erstrecken, sondern lediglich über einen mittleren Teilabschnitt, wie Fig. 23 entnehmbar ist. An diesen mittleren Vakuumschlitz 49f schließen sich zum Formraum-Abschnitt 50f jeweils zusätzliche Vakuumschlitze 86, 87 an, die jeweils an einen eigenen Vakuumkanal 28f angeschlossen sind und die nicht in Verbindung mit dem Vakuumschlitz 49f stehen. Diese Vakuumschlitze 49f und 86, 87 verlaufen ebenfalls parallel zur Formraumachse 45. Diese Trennung der parallel zur Formraumachse 45 verlaufenden und in Produktionsrichtung 4 hintereinander angeordneten Vakuumschlitze führt zu einer Verbesserung der Ausformung.

## Patentansprüche

1. Vorrichtung zur Herstellung von Kunststoff-Rohren (23), bei der mit einer Formausnehmung (27) versehene, sich auf einer Formstrecke (9) jeweils paarweise zu einer Form mit einer Formraumachse (45) ergänzende Halbkokillen (2) auf einem Maschinentisch (1) im Kreislauf geführt angeordnet sind, wobei mindestens zwei sich zu einem Paar ergänzende Halbkokillen (2, 2') einen Formraum-Abschnitt (46) zur Herstellung eines Sonderprofil-Abschnittes (37) des Rohres (23) aufweisen, wobei der Formstrecke (9) ein Spritzkopf (25) eines Extruders vorgeordnet ist, wobei die Halbkokillen (2) mit mit der jeweiligen Formausnehmung (27) verbundenen Vakuumkanälen (28) versehen sind, die in der Formstrecke (9) in im Maschinentisch (1) ausgebildete Vakuumanschlüsse (30) einmünden und die über Vakuumschlitze (44) in die Formausnehmung (27) einmünden, dadurch gekennzeichnet, daß der Formraum-Abschnitt (46) mindestens teilweise in Richtung der Formraumachse (45) orientierte Flächen aufweist und daß mindestens ein Vakuumschlitz (49) im Bereich dieser Flächen zumindest überwiegend parallel zur Formraumachse (45) verläuft und in dem - bezogen auf die Formraumachse (45) - radial am weitesten von dieser entfernten Bereich in den Formraum (27) einmündet.

2. Vorrichtung nach Anspruch 1, dadurch gekennzeichnet, daß die Flächen unter Bildung von mindestens einer Stoßkante (48) aneinander stoßen und daß mindestens ein Vakuumschlitz (49) in der Stoßkante (48) in den Formraum (27) mündet.

3. Vorrichtung nach Anspruch 1, dadurch gekennzeichnet, daß in Richtung der Formraumachse (45) mehrere nicht miteinander verbundene Vakuumschlitze (49) hintereinander in den Formraum (27) münden.

4. Vorrichtung nach Anspruch 1, dadurch gekennzeichnet, daß mindestens ein quer zur Formraumachse (45) verlaufender Vakuumschlitz (44) vorgesehen ist und daß mindestens ein mindestens angenähert parallel zur Formraumachse (45) verlaufender Vakuumschlitz (49) mit dem quer zur Formraumachse (45) verlaufenden Vakuumschlitz (44) verbunden ist.

## Claims

1. An apparatus for the production of plastic pipes (23) having half shells (2), which are provided with a mold recess (27) and of which two in each case combine on a molding path (9) to form a mold with a mold space axis (45), arranged on a machine bed (1) to be be circuit guided, two half shells (2, 2') that combine to form a pair having a mold space section (46) for the production of a special profile section (37) of the pipe (23), a head (25) of an extruder being arranged upstream of the molding path (9), the half shells (2) being provided with vacuum channels (28) connected with each mold recess (27) by way of vacuum slits (44) and vacuum connections (30) being provided in the machine bed (1) and opening into the molding path (9) where they run into the vacuum channels (28), characterized in that the mold space section (46) has surfaces oriented at least partially in the direction of the mold space axis (45) and in that in the area of these surfaces at least one vacuum slit (49) extends at least substantially parallel to the mold space axis (45) and opens into the mold space (27) in the portion which - in relation to the mold space axis (45) - is radially the most distant from it.

2. An apparatus according to claim 1, characterized in that the surfaces adjoin forming at least one joint edge (48) and in that a vacuum slit (49) opens into the mold space (27) in the joint edge (48).

3. An apparatus according to claim 1, characterized in that a plurality of vacuum slits (49) not connected with each other open one behind the other into the mold space (27) in the direction of the mold space axis (45).

4. An apparatus according to claim 1, characterized in that at least on vacuum slit (44) is provided extending at right angles to the mold space axis (45) and in that at least one vacuum slit (49) extending approximately parallel to the mold space axis (45) is connected with the vacuum slit (44) extending at right angles to the mold space axis (45).

## Revendications

1. Dispositif pour la production de tuyaux en matière plastique (23), dans lequel des demi-coquilles (2), qui sont pourvues d'un évidement de moulage (27) et se complètent par paires sur un tronçon de moulage (9) pour former un moule possédant un axe de cavité de moulage (45), sont disposées sur une table de machine (1) et guidées en boucle, au moins deux demi-coquilles (2, 2') qui se complètent pour former une paire comportant une portion de cavité de moulage (46) destinée à fabriquer une portion à profil spécial (37) du tuyau (23), une tête d'injection (25) d'une extrudeuse étant disposée en amont du tronçon de moulage (9), les demi-coquilles (2) étant munies de canaux de vide (28) qui sont reliés à l'évidement de moulage correspondant (27), qui débouchent, sur le tronçon de moulage (9), dans des raccords de vide (30) ménagés dans la table de machine (1) et qui aboutissent dans l'évidement de moulage (27) par l'intermédiaire de fentes de vide (44), caractérisé en ce que la portion de cavité de moulage (46) comporte des surfaces orientées au moins partiellement dans le sens de l'axe (45) de la cavité de moulage, et en ce qu'au moins une fente de vide (49) s'étend, dans la zone de ces surfaces, au moins en grande partie parallèlement à l'axe (45) de la cavité de moulage et débouche dans la cavité de moulage (27) dans la zone la plus éloignée radialement - par rapport à l'axe (45) de la cavité de moulage - dudit axe (45).

2. Dispositif selon la revendication 1, caractérisé en ce que les surfaces se rejoignent en formant au moins une arête de jonction (48), et en ce qu'au moins une fente de vide (49) pratiquée dans l'arête de jonction (48) débouche dans la cavité de moulage (27).

3. Dispositif selon la revendication 1, caractérisé en ce que, dans le sens de l'axe (45) de la cavité de moulage, plusieurs fentes de vide (49) non reliées entre elles débouchent l'une derrière l'autre dans la cavité de moulage (27).

4. Dispositif selon la revendication 1, caractérisé en ce qu'il est prévu au moins une fente de vide (44) transversale à l'axe (45) de la cavité de moulage, et en ce qu'au moins une fente de vide (49) s'étendant au moins sensiblement parallèlement à l'axe (45) de la cavité de moulage est reliée à la fente de vide (44) s'étendant transversalement à l'axe (45) de la cavité de moulage.
